(19) Europäisches Patentamt / European Patent Office / Office européen des brevets

(11) **EP 2 230 854 A1**

(12) **DEMANDE DE BREVET EUROPEEN**

(43) Date de publication:
**22.09.2010 Bulletin 2010/38**

(21) Numéro de dépôt: **10001190.7**

(22) Date de dépôt: **05.02.2010**

(51) Int Cl.:
**H04N 9/04** *(2006.01)*  **H04N 9/64** *(2006.01)*

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **16.03.2009 FR 0901221**

(71) Demandeur: **STMicroelectronics (Grenoble 2) SAS**
**38000 Grenoble (FR)**

(72) Inventeur: **Chotard, Ludovic**
**38120 - Saint Egreve (FR)**

(74) Mandataire: **Marchand, André et al**
**OMNIPAT,**
**24 Place des Martyrs de la Résistance**
**13100 Aix-en-Provence (FR)**

(54) **Procédé et dispositif pour réordonner des données d'image à partir d'une image ayant une répartition du type du motif de Bayer**

(57) L'invention concerne un procédé pour réordonner des données organisées suivant une configuration matricielle (du type Bayer), comprenant des étapes de lecture ligne par ligne de données d'entrée (Ciai, Cibi) ayant une configuration matricielle (3) pour obtenir un flux de données d'entrée (PXS), et comprenant des étapes de traitement d'une ligne (4n+1, n) des données d'entrée (Ciai, Cibi, ai, bi) consistant à : transférer dans un flux de sortie (CST) une donnée (C1bi) du flux d'entrée, appartenant à la ligne traitée, et transférer dans le flux de sortie au moins une donnée (C1ai) du flux d'entrée préalablement mémorisée, appartenant à une ligne précédente et ayant un même rang dans la configuration matricielle que la donnée transférée de la ligne traitée, et mémoriser une donnée du flux d'entrée (C2ai) appartenant à la ligne traitée et non transférée dans le flux de sortie, en remplacement de la donnée transférée, appartenant à une ligne précédente.

Fig. 5

EP 2 230 854 A1

**Description**

La présente invention concerne le traitement de données d'image, et en particulier, un traitement de séparation des couleurs d'une image provenant d'un capteur d'image.

Un capteur d'image présente généralement une structure matricielle dont chaque élément correspond à un pixel de l'image. Le capteur est associé à un circuit de lecture qui fournit séquentiellement la valeur de chaque pixel en effectuant une lecture ligne par ligne de la valeur de chaque pixel par exemple à partir du pixel situé dans le coin supérieur gauche de l'image jusqu'au pixel situé dans le coin inférieur droit de l'image. Pour fournir une information de couleur, chaque pixel est associé à un filtre couleur élémentaire ayant l'une des trois couleurs primaires rouge, vert, ou bleu. Les filtres couleur élémentaires du capteur d'image sont répartis suivant un motif de filtre couleur qui peut être du type Bayer. Un motif de filtre couleur du type Bayer comprend un motif élémentaire de 2 x 2 pixels qui est répété en ligne et en colonne, de manière à recouvrir tous les pixels du capteur d'image. Le motif élémentaire d'un filtre de Bayer comprend un filtre élémentaire rouge associé sur une même ligne et une même colonne à des filtres élémentaires verts, et un filtre élémentaire bleu disposé en diagonale par rapport au filtre rouge, les deux filtres élémentaires verts pouvant être identiques ou différents. Ainsi, un motif élémentaire de Bayer peut présenter la répartition de couleurs suivante :

$$R \quad GR$$
$$GB \quad B$$

dans laquelle R représente le filtre rouge, GR le filtre vert sur la même ligne que le filtre rouge, B le filtre bleu et GB le filtre vert sur la même ligne que le filtre bleu.

Dans ce qui suit, l'expression "plan couleur" désigne tous les pixels d'une image associés à une même couleur de filtre élémentaire. Une image fournie par un capteur d'image associé à un filtre de Bayer comprend donc quatre plans couleurs, correspondant chacun à la couleur R, GR, GB, B de l'un des quatre filtres élémentaires du motif élémentaire de Bayer.

Plus généralement, l'invention peut également s'appliquer à un flux de données quelconques organisées suivant une configuration matricielle dans laquelle chaque donnée est liée spatialement avec des données adjacentes de droite, de gauche, supérieure et inférieure, le flux de données résultant d'une lecture ligne par ligne des données dans la configuration matricielle. Ainsi, l'invention peut s'appliquer par exemple à un traitement de réorganisation de pixels d'une image de type RGB pour regrouper les pixels de l'image par blocs de n pixels en ligne et m pixels en colonne, par exemple par blocs de 8 x 2 ou 8 x 16 pixels.

Certains traitements d'image, et en particulier les traitements de compression d'image, peuvent requérir un traitement préalable de séparation des pixels de l'image en plans couleurs ou de réorganisation des pixels par blocs ou par segments comportant chacun des pixels de plusieurs lignes. Certains de ces traitements s'appliquent non pas à la totalité des pixels d'un plan couleur simultanément, mais seulement à quelques lignes. Dans certaines applications, il peut être souhaitable qu'un tel traitement de séparation des plans couleurs ou de réorganisation soit effectué à la volée, au même rythme que la réception des pixels de l'image provenant du capteur d'image, c'est-à-dire à la fréquence "pixel", pour fournir successivement plusieurs lignes de pixels d'un même plan couleur ou plusieurs blocs de pixels.

Si le traitement d'image s'applique à deux lignes successives de pixels d'un même plan couleur d'une image ayant une répartition de Bayer, il apparaît nécessaire pour effectuer la séparation des plans couleurs, de mémoriser deux lignes complètes successives de l'image, seule une des deux lignes comportant des pixels du plan couleur en cours de séparation. Le traitement de séparation pour constituer un bloc de deux lignes d'un même plan couleur peut ensuite être effectué à la volée au fur et à mesure de la réception des pixels d'une troisième ligne qui comprend les pixels d'une seconde ligne du plan couleur. Il en résulte que pendant la mémorisation des deux premières lignes complètes d'une image, le traitement de séparation des plans couleurs ne fournit aucun pixel au traitement suivant, par exemple de compression d'image. A la réception d'une troisième ligne d'image, le traitement de séparation fournit successivement deux blocs de deux lignes d'image des deux plans couleurs auxquels appartient la troisième ligne d'image. A la réception d'une quatrième ligne d'image, le traitement de séparation fournit successivement deux blocs de deux lignes d'image des deux plans couleurs auxquels appartient la quatrième ligne d'image. Si les lignes d'image doivent être fournies au traitement suivant à la cadence de réception des pixels par le traitement de séparation, au moins l'un des deux blocs de pixels de deux plans couleurs correspondant à deux lignes d'image doivent être mémorisés pour être transmis lors de la mémorisation des deux lignes d'image complètes.

Plus généralement, si des blocs de plus de deux lignes successives de pixels d'un même plan couleur doivent être fournis par le traitement de séparation, le nombre de lignes de l'image à mémoriser est égal à $2(n-1)$, n étant le nombre de lignes successives de pixels d'un même plan couleur à fournir.

En vue de mettre en oeuvre le traitement de séparation des plans couleurs par un circuit intégré, ou plus généralement un traitement de réorganisation de données dans un flux de données, il peut être souhaitable de réduire la taille de la mémoire et des circuits nécessaires à la réalisation de ce traitement.

L'invention concerne également un traitement inverse consistant à reconstituer une image telle qu'elle serait fournie par un capteur d'image à motif de Bayer, à partir de blocs de pixels de plans couleur successifs. En effet, certaines applications sont conçues pour traiter des images dans lesquelles les pixels appartenant aux différents plans couleurs ont une répartition correspondant à un filtre de Bayer. Il peut être également souhaitable de réduire la taille de la mémoire et des circuits nécessaires à la réalisation de ce traitement inverse.

Un mode de réalisation concerne un procédé pour réordonner des données organisées suivant une configuration matricielle, comprenant une étape de lecture ligne par ligne de données d'entrée ayant une configuration matricielle pour obtenir un flux de données d'entrée. Selon un mode de réalisation, le procédé comprend des étapes de traitement d'une ligne des données d'entrée consistant à : i) transférer dans un flux de sortie une donnée du flux d'entrée, appartenant à la ligne traitée, et transférer dans le flux de sortie au moins une donnée du flux d'entrée préalablement mémorisée, appartenant à une ligne précédente et ayant un même rang dans la configuration matricielle que la donnée transférée de la ligne traitée, et ii) mémoriser une donnée du flux d'entrée appartenant à la ligne traitée et non transférée dans le flux de sortie, en remplacement de la donnée transférée, appartenant à une ligne précédente.

Selon un mode de réalisation, le procédé comprend des étapes de répétition des étapes i) et ii) avec une donnée non déjà transférée ou mémorisée de la ligne traitée, jusqu'à ce que toutes les données de la ligne traitée soient transférées ou mémorisées.

Selon un mode de réalisation, les données transférées dans le flux de sortie appartiennent successivement et alternativement à une même ligne et à une même ligne précédente de l'image.

Selon un mode de réalisation, une donnée sur deux du flux d'entrée est transférée dans le flux de sortie et les données du flux d'entrée non transférées dans le flux de sortie sont mémorisées.

Selon un mode de réalisation, les données du flux d'entrée transférées dans le flux de sortie sont transférées dans le flux de sortie par groupes d'au moins une donnée en alternance avec des groupes d'au moins une donnée préalablement mémorisée.

Selon un mode de réalisation, les données d'entrée sont des pixels d'une image dans laquelle chaque ligne comprend des pixels appartenant à plusieurs plans couleurs, les pixels étant transférés dans le flux de sortie par blocs dont tous les pixels appartiennent à un même plan couleur, les pixels mémorisés durant le transfert d'un bloc dans le flux de sortie appartenant à un plan couleur différent de celui des pixels du bloc transféré dans le flux de sortie.

Selon un mode de réalisation, l'image transmise dans le flux d'entrée présente une répartition de pixels du type Bayer, le procédé comprenant des étapes de transfert dans le flux de sortie des pixels d'une ligne appartenant à un même plan couleur en alternance avec des pixels du même plan couleur, d'une ligne précédente préalablement mémorisée de l'image, et de mémorisation des pixels de la ligne, appartenant à un autre plan couleur.

Selon un mode de réalisation, les pixels du flux de sortie présentent une configuration matricielle dans laquelle tous les pixels de chaque ligne de la configuration matricielle appartiennent à un même plan couleur.

Selon un mode de réalisation, les données d'entrée sont des pixels d'une image dans laquelle tous les pixels de chaque ligne appartiennent à un seul et même plan couleur, et les pixels du flux de sortie présentent une répartition du type Bayer, le procédé comprenant des étapes de transfert dans le flux de sortie d'un pixel sur deux d'une ligne appartenant à un même plan couleur, en alternance avec des pixels préalablement mémorisés appartenant à un autre et même plan couleur, et de mémorisation des pixels de la ligne en cours de traitement qui ne sont pas transférés dans le flux de sortie.

Un mode de réalisation concerne également un dispositif pour réordonner des données organisées suivant une configuration matricielle, configuré pour mettre en oeuvre le procédé défini précédemment.

Selon un mode de réalisation, le dispositif comprend une capacité de mémoire temporaire limitée à une ligne de données de la configuration matricielle des données d'entrée.

Un mode de réalisation concerne également un flux de données, comprenant une ligne comportant des groupes d'au moins une donnée extraite d'une même ligne d'une configuration matricielle d'origine alternant avec des groupes d'au moins une donnée extraite d'une même ligne précédente de la configuration matricielle d'origine et ayant un même rang dans la configuration matricielle que la donnée d'un groupe précédent dans la ligne de la configuration matricielle du flux de données.

Selon un mode de réalisation, chaque groupe de données comprend une seule donnée.

Selon un mode de réalisation, la configuration matricielle d'origine est celle d'une image ayant une répartition du type Bayer, la ligne et la ligne précédente de la configuration d'origine étant espacées d'une ligne de la configuration d'origine.

Des exemples de réalisation de l'invention seront décrits dans ce qui suit, à titre non limitatif en relation avec les figures jointes parmi lesquelles :

- la figure 1 représente schématiquement un dispositif de traitement d'images connecté à un capteur d'image,
- la figure 2 représente un exemple de répartition des pixels d'une image dans différents plans couleurs,

- la figure 3 représente schématiquement un dispositif de traitement de séparation des plans couleurs d'une image, selon un mode de réalisation,
- les figures 4A à 4H sont des chronogrammes de signaux illustrant le fonctionnement du dispositif de traitement représenté sur la figure 3,
- les figures 5 à 8 représentent le dispositif de traitement de la figure 3 à différentes étapes du traitement d'une image,
- la figure 9 représente schématiquement un dispositif de traitement effectuant un traitement inverse de celui de la figure 3,
- les figures 10A à 10G sont des chronogrammes de signaux illustrant le fonctionnement du dispositif de traitement représenté sur la figure 9,
- les figures 11 à 14 représentent le dispositif de traitement de la figure 9, à différentes étapes de traitement de blocs de pixels d'un même plan couleur,
- la figure 15 représente une partie de l'image de la figure 3 dans laquelle les pixels sont regroupés en blocs de deux segments de 1 pixel de large,
- la figure 16 représente la partie de l'image de la figure 15 après avoir subi le traitement de séparation des plans couleurs,
- la figure17 représente une partie d'un ensemble de données dans lequel les données sont regroupées en segments de huit données de large,
- la figure 18 représente la partie d'l'ensemble de données de la figure 17 après avoir subi un traitement de modification de la répartition des données, selon un mode de réalisation.

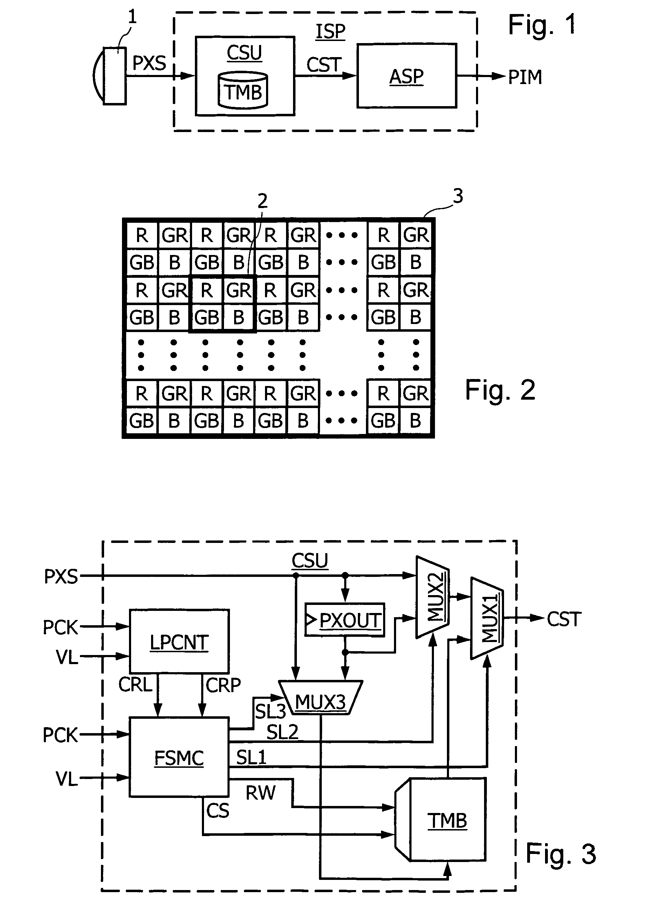

La figure 1 représente un dispositif de traitement d'image ISP. Le dispositif ISP comprend une unité de séparation des plans couleurs CSU connectée à un capteur d'image 1 et une unité de traitement spécifique ASP connectée à l'unité CSU. L'unité CSU reçoit un flux de pixels PXS du capteur d'image 1, et fournit à l'unité ASP un flux de pixels CST regroupés par blocs de pixels d'un même plan couleur. L'unité ASP applique un traitement au flux CST et fournit des données d'image PIM. L'unité ASP applique au flux CST par exemple un traitement de compression d'image en vue de transmettre ou stocker les images fournies par le capteur 1, ou un traitement de filtrage par plan couleur.

La figure 2 représente un exemple de répartition matricielle en lignes et en colonnes de filtres couleurs sur la surface photosensible du capteur 1 ou un exemple de répartition des pixels dans une image 3 fournie par le capteur 1. La répartition représentée sur la figure 2 est formée d'une juxtaposition de motifs identiques de Bayer 2 de 4 pixels. Dans l'exemple de la figure 2, chaque motif 2 comprend un pixel rouge R, un pixel vert GR sur la même ligne que le pixel R, un pixel vert GB sur la même colonne que le pixel R et un pixel bleu B sur la même ligne que le pixel GB.

D'autres agencements des pixels R, GR, B, GB dans le motif 2 sont envisageables, dès lors que les deux pixels verts GR et GB ne sont placés ni sur la même ligne ni sur la même colonne. Par ailleurs, l'image ne comporte pas nécessairement un nombre pair de lignes ou de colonnes.

La figure 3 représente l'unité CSU de séparation des plans couleurs. L'unité CSU comprend trois multiplexeurs MUX1, MUX2, MUX3, un compteur de pixels et de lignes LPCNT, une machine d'état à états finis FSMC, un registre de pixel PXOUT et une mémoire tampon TMB. Le multiplexeur MUX2 reçoit sur une entrée le flux de pixels PXS provenant par exemple du capteur d'image 1. La sortie du multiplexeur MUX2 est connectée à une entrée du multiplexeur MUX1 qui fournit en sortie le flux de pixels CST regroupés par blocs de plan couleur. Le registre PXOUT reçoit également en entrée le flux de pixels PXS. La sortie du registre PXOUT est connectée à une entrée du multiplexeur MUX2 et une entrée du multiplexeur MUX3. Une autre entrée du multiplexeur MUX3 reçoit également le flux de pixels PXS. La sortie du multiplexeur MUX3 est connectée à une entrée de donnée de la mémoire TMB dont une sortie de donnée est connectée à une entrée du multiplexeur MUX1. Le compteur LPCNT reçoit un signal d'horloge à la fréquence "pixel" PCK correspondant à la cadence des pixels dans le flux PXS, et un signal de début de ligne d'image VL, et fournit à la machine d'état FSMC un numéro de pixel CRP dans une ligne courante et un numéro de ligne CRL dans une image courante en cours de réception par l'unité CSU. La machine d'état FSMC reçoit également les signaux PCK et VL, ainsi que les numéros CRP et CRL, et fournit des signaux de commande SL1, SL2, SL3 aux multiplexeurs MUX1, MUX2 et MUX3, et des signaux d'activation CS et de commande d'écriture et lecture RW à la mémoire TMB. La mémoire TMB est configurée pour effectuer simultanément une écriture et émettre une donnée requise en lecture lors d'un cycle précédent. A cet effet, elle comprend par exemple deux unités de type FIFO capables de mémoriser chacune tous les pixels d'une demi ligne de l'image 3. Le registre PXOUT est également configuré pour effectuer simultanément une lecture et une écriture d'un pixel.

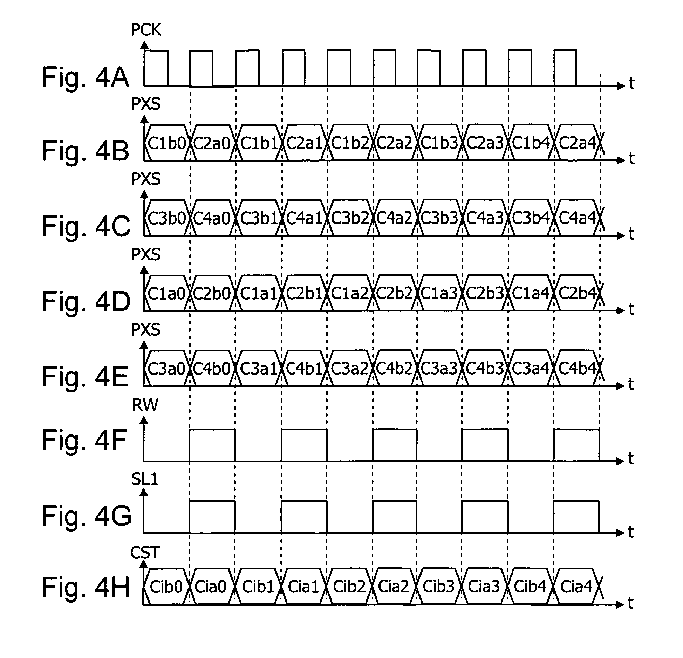

Les figures 4A à 4H représentent des chronogrammes de signaux transitant dans l'unité CSU. La figure 4A représente le chronogramme du signal d'horloge pixel PCK. Les figures 4B, 4C, 4D, 4E représentent des chronogrammes du signal de pixel PXS en fonction du numéro de ligne dans l'image. La figure 4B représente le signal PXS lors de l'arrivée d'une ligne de rang $4n+1$ d'une image, contenant des pixels de couleur C1 et C2 (n étant un nombre entier compris entre 0 et le nombre de lignes de l'image divisé par 4). Dans une ligne de rang $4n+1$, les pixels C1 sont transférés dans le flux de sortie de l'unité CSU. La figure 4C représente le signal PXS lors de l'arrivée d'une ligne de rang $4n+2$

de l'image, contenant des pixels de couleur C3 et C4. Dans une ligne de rang 4n+2, les pixels C3 sont transférés dans le flux de sortie de l'unité CSU. La figure 4D représente le signal PXS lors de l'arrivée d'une ligne de rang 4n+3 de l'image, contenant des pixels de couleur C1 et C2. Dans une ligne de rang 4n+2, les pixels C2 sont transférés dans le flux de sortie de l'unité CSU. La figure 4E représente le signal PXS lors de l'arrivée d'une ligne de rang 4n+4 de l'image, contenant des pixels de couleur C3 et C4. Dans une ligne de rang 4n+4, les pixels C4 sont transférés dans le flux de sortie de l'unité CSU. Les figures 4F et 4G représentent des chronogrammes des signaux RW et SL1. Les signaux RW et SL1 qui changent d'état à chaque cycle du signal PCK sont en phase. La figure 4H représente un chronogramme du signal de sortie CST. Le signal de sortie CST comprend des blocs de pixels a et b de même couleur Ci (= C1, C2, C3 ou C4) appartenant à deux lignes de l'image 3, séparées par une seule autre ligne, les pixels a et b des deux lignes apparaissant dans le bloc en alternance.

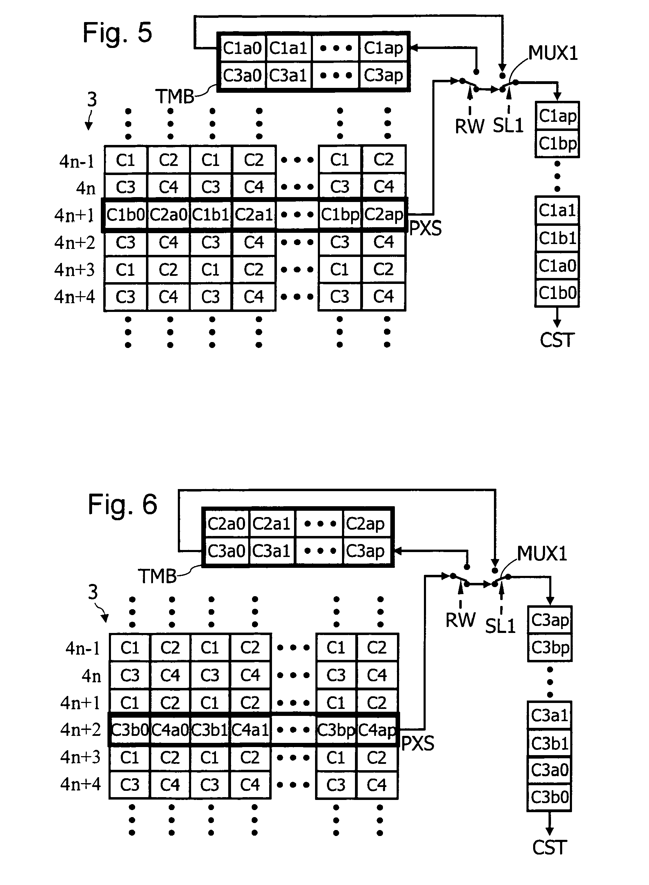

Le fonctionnement de la machine d'état FSMC est décrit dans ce qui suit en référence aux figures 5 à 8 qui représentent l'image 3 et en particulier la ligne de l'image en cours de réception par l'unité CSU, le contenu de la mémoire TMB et le contenu du flux de sortie CST. Dans l'image 3 représentée sur les figures 5 à 8, les couleurs du motif de Bayer sont référencées C1, C2, C3, C4. La mémoire TMB présente une capacité correspondant à deux demi lignes de l'image 3, et comprend ainsi deux zones mémoire pour mémoriser chacune les pixels d'un même plan couleur appartenant à une même ligne de l'image 3.

La figure 5 représente l'état de l'unité CSU au début de la réception d'une ligne 4n+1 de l'image 3, n étant un nombre entier compris entre 0 et le nombre de lignes de l'image divisé par 4. La ligne 4n+1 comprend des pixels de couleur C1 alternés avec des pixels de couleur C2. Les pixels de couleur C1 de la ligne 4n+1 sont numérotés de C1b0 à C1 bp, et les pixels de couleur C2 de cette ligne sont numérotés de C2a0 à C2ap, p étant le nombre de pixels de couleur C1 ou C2 dans la ligne 4n+1, c'est-à-dire le nombre de pixels d'une demi ligne de l'image 3. Juste avant le début de la réception du premier pixel C1b0 de la ligne 4n+1, la mémoire TMB mémorise dans une première ligne les pixels de couleur C1 de la ligne 4n-1 de l'image 3, numérotés de C1a0 à C1 ap, et dans une seconde ligne les pixels de couleur C3 de la ligne 4n, numérotés de C3a0 à C3ap :

TMB(1)=[C1a0..C1ap] et TMB(2)=[C3a0..C3ap]

Lorsque le numéro de la ligne CRL est égal à 4n+1, la machine d'état FSMC commande le multiplexeur MUX2 pour qu'il relie l'entrée PXS à l'entrée du multiplexeur MUX1, et commande le multiplexeur MUX3 pour qu'il relie l'entrée PXS à l'entrée de la mémoire TMB. Au premier cycle du signal d'horloge PCK, la machine d'état FSMC est configurée pour commander la fourniture dans le flux de sortie CST du premier pixel C1b0 de la ligne 4n+1, dès sa réception par l'unité CSU:

$$\text{C1b0} \rightarrow \text{CST} \qquad\qquad\qquad \text{// TMB(1)=[C1a0..C1ap]}$$

Au second cycle du signal d'horloge PCK, le premier pixel C1a0 de la première ligne de la mémoire TMB est transféré dans le flux de sortie CST, et le second pixel reçu par l'unité CSU, à savoir un pixel C2a0 est mémorisé dans la mémoire TMB :

$$\text{C1a0} \rightarrow \text{CST et C2a0} \rightarrow \text{TMB} \qquad \text{// TMB(1)=[C1a1..C1ap/C2a0]}$$

La machine d'état FSMC est configurée pour répéter les opérations réalisées durant ces deux cycles jusqu'à la réception du dernier pixel C2ap de la ligne 4n+1 qui est mémorisé dans la mémoire TMB :

$$\text{C1b1} \rightarrow \text{CST} \qquad\qquad\qquad \text{// TMB(1)=[C1a1..C1ap/C2a0]}$$
$$\text{C1a1} \rightarrow \text{CST et C2a1} \rightarrow \text{TMB} \qquad \text{// TMB(1)=[C1a2..C1ap/C2a0/C2a1]}$$
$$\dots$$
$$\text{C1bp} \rightarrow \text{CST} \qquad\qquad\qquad \text{// TMB(1)=[C1ap/C2a0..C2a(p-1)]}$$
$$\text{C1ap} \rightarrow \text{CST et C2ap} \rightarrow \text{TMB} \qquad \text{// TMB(1)=[C2a0..C2ap]}$$

Tous les pixels de couleur C1 des lignes 4n+1 et 4n-1 ont alors été transférés en alternance dans le flux CST, tandis que tous les pixels de couleur C2 de la ligne 4n+1 ont été stockés dans la mémoire TMB à la place des pixels de couleur C1 de la ligne 4n-1.

Par ailleurs, durant la réception de la première ligne de l'image 3, la mémoire TMB ne contient pas les pixels d'une ligne précédente de mêmes couleurs de la même image 3. La machine d'état FSMC peut donc être configurée pour dupliquer dans le flux de sortie CST de l'unité CSL les pixels de couleur C1 de la ligne 1 (n=0) de l'image.

La figure 6 représente l'état de l'unité CSU au début de la réception d'une ligne 4n+2 de l'image 3. La ligne 4n+2 comprend des pixels de couleur C3 alternés avec des pixels de couleur C4. Les pixels de couleur C3 de la ligne 4n+2 sont numérotés de C3b0 à C3bp, et les pixels de couleur C4 de cette ligne sont numérotés de C4a0 à C4ap. Juste avant le début de la réception du premier pixel C3b0 de la ligne 4n+2, la mémoire TMB mémorise en première ligne, les pixels de la ligne 4n+1 ayant la couleur C2, numérotés de C2a0 à C2ap, et en seconde ligne, les pixels ayant la couleur C3 de la ligne 4n, numérotés de C3a0 à C3ap :

$$TMB(1)=[C2a0..C2ap] \text{ et } TMB(2)=[C3a0..C3ap]$$

Le traitement de la ligne 4n+2 est identique à celui de la ligne 4n+1, mis à part que la seconde ligne de la mémoire TMB est lue et chargée au fur et à mesure avec les pixels C4a0 à C4ap de la ligne 4n+2 :

| | |
|---|---|
| C3b0→CST | // TMB(2)=[C3a0..C3ap] |
| C3a0→CST et C4a0→TMB | // TMB(2)=[C3a1..C3ap/C4a0] |
| C3b1→CST | // TMB(2)=[C3a1..C3ap/C4a0] |
| C3a1→CST et C4a1→TMB | // TMB(2)=[C3a2..C3ap/C4a0/C4a1] |
| … | |
| C3bp→CST | // TMB(2)=[C3ap/C4a0..C4a(p-1)] |
| C3ap→CST et C4ap→TMB | // TMB(2)=[C4a0..C4ap] |

A la suite de la réception du dernier pixel C4ap de la ligne 4n+2, tous les pixels de couleur C3 des lignes 4n+2 et 4n ont ainsi été transférés en alternance dans le flux CST, tandis que tous les pixels de couleur C4 de la ligne 4n+2 ont été stockés dans la mémoire TMB à la place des pixels de couleur C3 de la ligne 4n.

Par ailleurs, durant la réception de la seconde ligne de l'image 3, la mémoire TMB ne contient pas les pixels d'une ligne précédente de mêmes couleurs de la même image 3. La machine d'état FSMC peut donc être configurée pour dupliquer dans le flux de sortie CST de l'unité CSL les pixels de couleur C3 de la ligne 2 (n=0) de l'image.

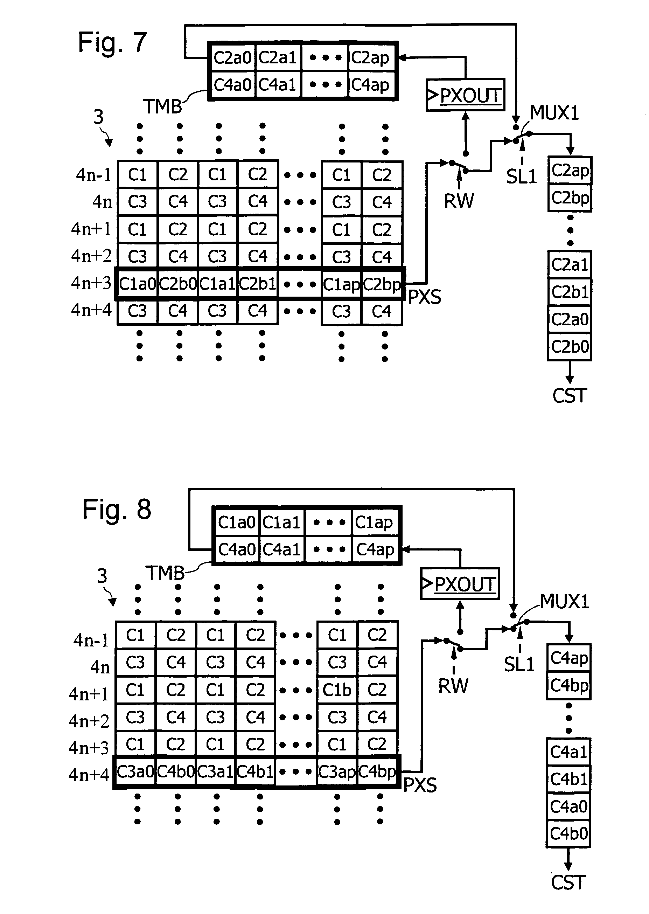

La figure 7 représente l'état de l'unité CSU au début de la réception d'une ligne 4n+3 de l'image 3. La ligne 4n+3 comprend des pixels de couleur C1, numérotés de C1a0 à C1 ap alternés avec des pixels de couleur C2 numérotés de C2b0 à C2bp. Juste avant le début de la réception du premier pixel C1a0 de la ligne 4n+3, la mémoire TMB mémorise en première ligne, les pixels de couleur C2 de la ligne 4n+1, numérotés de C2a0 à C2ap, et en seconde ligne, les pixels de couleur C4 de la ligne 4n+2, numérotés de C4a0 à C4ap.

$$TMB(1)=[C2a0..C2ap] \text{ et } TMB(2)=[C4a0..C4ap]$$

Lorsque le numéro de la ligne CRL est égal à 4n+3, la machine d'état commande le multiplexeur MUX2 pour qu'il relie l'entrée PXS à l'entrée du multiplexeur MUX1, et le multiplexeur MUX3 pour qu'il relie la sortie du registre PXOUT à l'entrée de la mémoire TMB. Au premier cycle du signal d'horloge PCK, la machine d'état FSMC est configurée pour commander le transfert du premier pixel reçu C1a0 dans le registre PXOUT :

$$C1a0→PXOUT \qquad\qquad // TMB(1)=[C2a0..C2ap]$$

Au second cycle du signal d'horloge PCK, le pixel reçu C2b0 est fourni en sortie CST, dès sa réception par l'unité CSU :

$$C2b0 \rightarrow CST \qquad\qquad // \; TMB(1)=[C2a0..C2ap]$$

Au troisième cycle du signal d'horloge PCK, le premier pixel C2a0 de la première ligne de la mémoire TMB est transféré dans le flux de sortie CST, le premier pixel reçu par l'unité CSU, à savoir le pixel C1a0 est transféré du registre PXOUT dans la mémoire TMB, et le troisième pixel reçu C1a1 est transféré dans le registre PXOUT :

$$C2a0 \rightarrow CST \; et \; C1a0 \rightarrow TMB \; et \; C1a1 \rightarrow PXOUT$$
$$// \; TMB(1)=[C2a1..C2ap/C1a0]$$

La machine d'état FSMC est configurée pour répéter les opérations réalisées durant ces deux derniers cycles jusqu'à la réception du dernier pixel C2ap de la ligne 4n+3 qui est transféré dans le flux de sortie CST :

$$C2b1 \rightarrow CST \qquad\qquad // \; TMB(1)=[C2a1..C2ap/C1a0]$$
$$C2a1 \rightarrow CST \; et \; C1a1 \rightarrow TMB \; et \; C1a2 \rightarrow PXOUT$$
$$// \; TMB(1)=[C2a2..C2ap/C1a0/C1a1]$$
$$\ldots$$
$$C2bp \rightarrow CST \qquad\qquad // \; TMB(1)=[C2ap/C1a0..C1a(p-1)]$$
$$C2ap \rightarrow CST \; et \; C1ap \rightarrow TMB \qquad // \; TMB(1)=[C1a0..C1ap]$$

Tous les pixels de couleur C2 des lignes 4n+1 et 4n+3 ont alors été transférés dans le flux de sortie CST, tandis que tous les pixels de couleur C1 de la ligne 4n+3 ont été stockés dans la mémoire TMB à la place des pixels de couleur C2 de la ligne 4n+1.

La figure 8 représente l'état de l'unité CSU au début de la réception d'une ligne 4n+4 de l'image 3. La ligne 4n+4 comprend des pixels de couleur C3, numérotés de C3a0 à C3ap alternés avec des pixels de couleur C4 numérotés de C4b0 à C4bp. Juste avant le début de la réception du premier pixel C3a0 de la ligne 4n+4, la mémoire TMB mémorise en première ligne, les pixels de couleur C1 de la ligne 4n+3, numérotés de C1a0 à C1ap, et en seconde ligne, les pixels de couleur C4 de la ligne 4n+2, numérotés de C4a0 à C4ap :

$$TMB(1)=[C1a0..C1ap] \; et \; TMB(2)=[C4a0..C4ap]$$

Le traitement de la ligne 4n+4 est identique à celui de la ligne 4n+3, mis à part que la seconde ligne de la mémoire TMB est lue et chargée au fur et à mesure avec les pixels C3a0 à C3ap de la ligne 4n+4 :

$$C3a0 \rightarrow PXOUT \qquad\qquad // \; TMB(2)=[C4a0..C4ap]$$

C4b0→CST                  // TMB(2)=[C4a0..C4ap]

C4a0→CST et C3a0→TMB et C3a1→PXOUT

                        // TMB(2)=[C4a1..C4apC3a0]

C4b1→CST                  // TMB(2)=[C4a1..C4apC3a0]

C4a1→CST et C3a1→TMB et C3a2→PXOUT

                        // TMB(2)=[C4a2..C4apC3a0C3a1]

…

C4bp→CST                  // TMB(2)=[C4apC3a0..C3a(p-1)]

C4ap→CST et C3ap→TMB      // TMB(2)=[C3a0..C3ap]

A la suite de la réception du dernier pixel C4bp de la ligne 4n+4, tous les pixels de couleur C4 des lignes 4n+2 et n+3 sont ainsi transférés en alternance dans le flux de sortie CST, tandis que tous les pixels de couleur C3 de la ligne 4n+4 ont été stockés dans la mémoire TMB à la place des pixels de couleur C4 de la ligne 4n+2.

Sur les figures 5 à 8, l'unité CSU fournit dans le flux de sortie CST d'abord le premier ou le second pixel Cib0 de la ligne en cours de réception de l'image 3, puis le pixel Cia0 d'une ligne précédente de l'image mémorisé dans la mémoire TMB. Le flux de sortie comprend ainsi une succession de lignes appartenant successivement aux quatre plans couleurs de l'image initiale.

La machine d'état FSMC peut également être configurée pour fournir d'abord le premier pixel mémorisé Cia0, puis le premier pixel Cib0 de la ligne d'image en cours de réception. A cet effet, au début de la réception d'une ligne de rang 4n+1 ou 4n+2 de l'image 3, la machine d'état FSMC commande le multiplexeur MUX2 pour relier la sortie du registre PXOUT à l'entrée du multiplexeur MUX1, et le multiplexeur MUX3 pour relier l'entrée PXS à l'entrée de la mémoire TMB. Avant la réception d'une ligne de rang 4n+3 ou 4n+4 de l'image 3, la machine d'état FSMC commande le multiplexeur MUX2 pour relier l'entrée PXS à l'entrée du multiplexeur MUX1, et le multiplexeur MUX3 pour relier l'entrée PXS à l'entrée de la mémoire TMB. Bien entendu, le multiplexeur MUX2 est inutile et peut être supprimé si l'ordre requis des pixels ai et bi dans le flux de sortie CST est fixe.

Ainsi, l'unité CSU peut regrouper les pixels par bloc de pixels d'un même plan couleur appartenant à deux lignes d'image en ne mémorisant que deux demi lignes d'image, soit l'équivalent d'une ligne d'image. Il est également à noter que l'unité CSU fournit les pixels rangés par bloc dans le flux de sortie CST à la même cadence que celle du flux d'entrée PXS.

L'unité CSU peut également être configurée pour regrouper par segments de plusieurs pixels, les pixels mémorisés dans la mémoire TMB et les pixels de la ligne d'image en cours de réception avant de transférer les pixels dans le flux de sortie CST. Ainsi, les pixels dans le flux de sortie CST peuvent avoir l'ordre suivant :

Cib0/Cib1/.../Cib(k-1)/Cia0/Cia1/.../Cia(k-1)/Cibk/.../(Cib2k-1)/Ciak/.../Cia(2k-1)/...

dans lequel k représente le nombre de pixels par segment. L'unité CSU comprend alors une mémoire tampon supplémentaire ou le registre PXOUT est étendu pour mémoriser k pixels pendant le temps que les pixels d'un segment précédent soient transmis dans le flux de sortie CST.

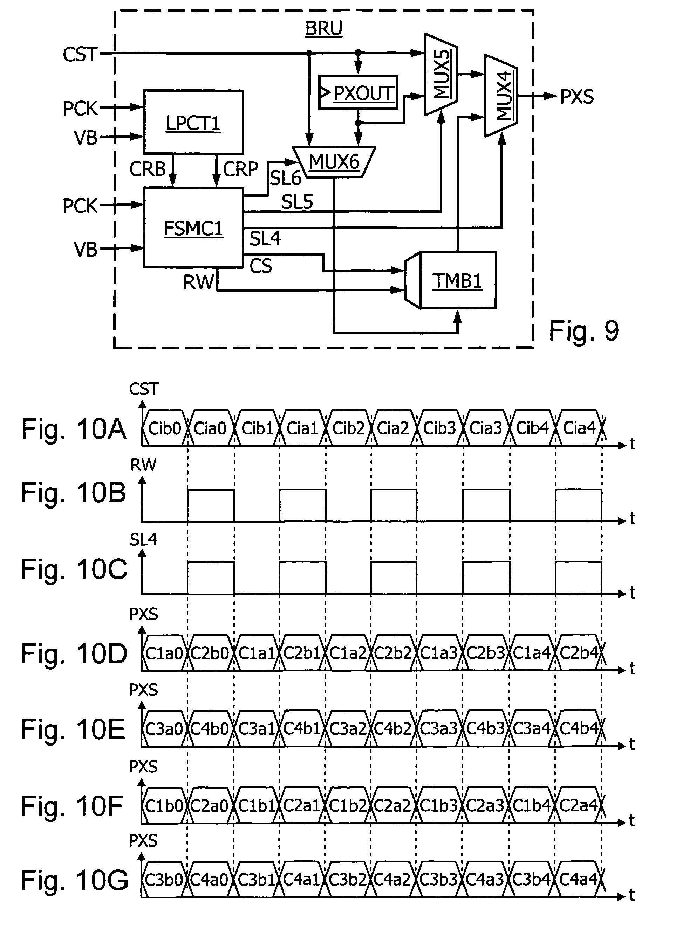

La figure 9 représente une unité de traitement BRU pour reconstituer une image ayant la répartition de Bayer à partir du flux de pixels CST regroupés par blocs de pixels de même couleur. L'unité BRU comprend trois multiplexeurs MUX4, MUX5, MUX6, une machine d'état à états finis FSMC1, un compteur de pixels et de lignes LPCT1, un registre de pixel PXOUT1 et une mémoire tampon TMB1. Le multiplexeur MUX5 reçoit sur une entrée le flux de pixels CST provenant par exemple d'une unité de traitement d'image, par exemple une unité de compression d'image. La sortie du multiplexeur MUX5 est connectée à une entrée du multiplexeur MUX4 qui fournit en sortie un flux de pixels PXS d'une image ayant une répartition de Bayer, le flux PXS comprenant successivement les pixels de chaque ligne de l'image. Le registre PXOUT1 reçoit également en entrée le flux de pixels CST. La sortie du registre PXOUT1 est connectée à une entrée du multiplexeur MUX6 dont une autre entrée reçoit également le flux de pixels CST. La sortie du multiplexeur MUX6 est connectée à une entrée de donnée de la mémoire TMB1 dont une sortie de donnée est connectée à une entrée du multiplexeur MUX4. Le compteur LPCT1 reçoit un signal d'horloge à la fréquence "pixel" PCK correspondant à la cadence des pixels dans le flux CST, et un signal de début de bloc couleur d'image VB, et fournit à la machine d'état FSMC1 un numéro de pixel CRP dans un bloc couleur courant et un numéro de bloc CRB dans une image courante en cours de réception par l'unité BRU. La machine d'état FSMC1 reçoit également les signaux PCK et VB, ainsi que les numéros CRP et CRB, et fournit des signaux de commande SL4, SL5 et SL6 aux multiplexeurs MUX4, MUX5, MUX6, et des signaux d'activation CS et de commande d'écriture et lecture RW à la mémoire TMB1. La mémoire TMB1 est configurée pour effectuer simultanément une écriture et émettre une donnée requise en lecture lors d'un cycle précédent. A cet effet, elle comprend deux unités par exemple de type FIFO capables de mémoriser chacune tous les pixels d'un demi bloc couleur reçu dans le flux CST. Le registre PXOUT1 est également configuré pour effectuer simultanément une lecture et une écriture d'un pixel.

Les figures 10A à 10H représentent des chronogrammes de signaux transitant dans l'unité BRU. La figure 10A représente le chronogramme du flux de blocs couleurs CST. Les figures 10B et 10C représentent des chronogrammes des signaux RW et SL4. Les signaux RW et SL4 qui changent d'état à chaque arrivée d'un pixel sont en phase dans le flux CST. Les figures 10D, 10E, 10F, 10G représentent des chronogrammes du signal de sortie PXS en fonction du numéro de bloc de l'image. La figure 10D présente le signal PXS lors de l'arrivée d'un bloc de pixels de couleur C1, les pixels C1ai étant transférés dans le flux de sortie PXS de l'unité BRU en alternance avec des pixels C2bi de couleur C2 préalablement mémorisés dans la mémoire TMB1. La figure 10E représente le signal PXS lors de l'arrivée d'un bloc de pixels de couleur C3, les pixels C3ai étant transférés dans le flux de sortie de l'unité BRU avec des pixels C4bi préalablement mémorisés dans la mémoire TMB1. La figure 10F représente le signal PXS lors de l'arrivée d'un bloc de pixels de couleur C2, les pixels C2ai étant transférés dans le flux de sortie de l'unité BRU en alternance avec des pixels C1bi préalablement mémorisés dans la mémoire TMB1. La figure 10G représente le signal PXS lors de l'arrivée d'un bloc de pixels de couleur C4, les pixels C4 étant transférés dans le flux de sortie de l'unité BRU en alternance avec des pixels C2bi préalablement mémorisés dans la mémoire TMB1.

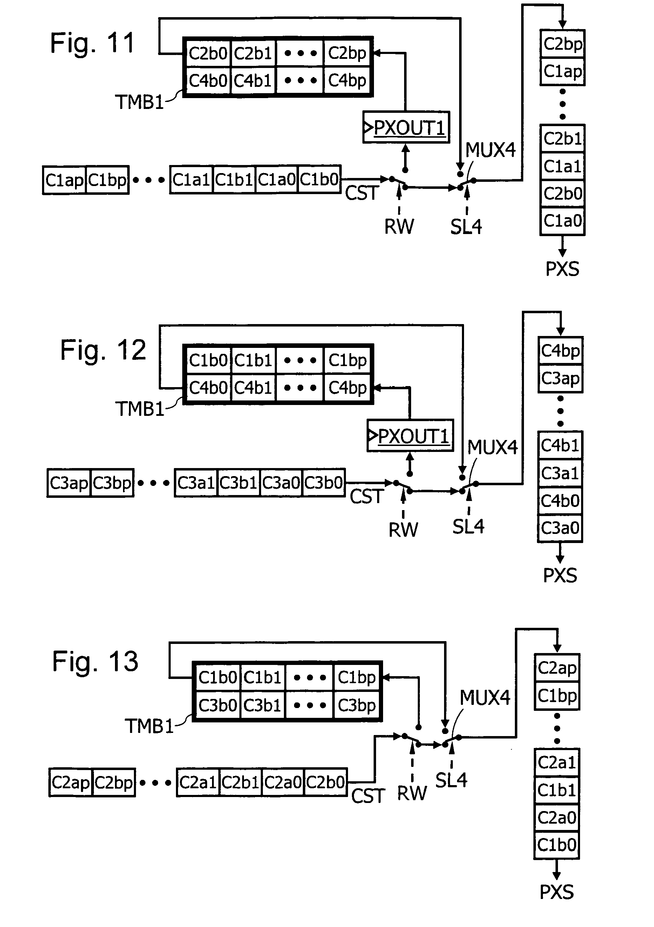

Le fonctionnement de la machine d'état FSMC1 est décrit dans ce qui suit en référence aux figures 11 à 14 qui représentent un bloc de couleur C1, C2, C3 ou C4 du flux CST en cours de réception par l'unité BRU, le contenu de la mémoire TMB1 et le contenu du flux de sortie PXS. La mémoire TMB1 présente une capacité correspondant à deux demi lignes de l'image 3 ou deux demi blocs couleur, et comprend ainsi deux zones mémoire pour mémoriser chacune les pixels d'un même bloc couleur.

La figure 11 représente l'état de l'unité BRU au début de la réception d'un bloc de pixels de couleur C1 comprenant des pixels numérotés de C1b0 à C1 bp (p étant le nombre de pixels d'un demi bloc couleur ou une demi ligne de l'image 3) appartenant à une même ligne de l'image 3 en alternance avec des pixels numérotés de C1a0 à C1ap appartenant à une ligne précédente de l'image. Le bloc de couleur C1 commence par le pixel C1b0. Juste avant le début de la réception du premier pixel C1b0, la mémoire TMB1 mémorise dans une première ligne des pixels de couleur C2, numérotés de C2b0 à C2bp, et dans une seconde ligne des pixels de couleur C4, numérotés de C4b0 à C4bp :

$$TMB1(1)=[C2b0..C2bp] \text{ et } TMB1(2)=[C4b0..C4bp]$$

La machine d'état FSMC1 commande le multiplexeur MUX5 pour qu'il relie l'entrée CST à l'entrée du multiplexeur MUX4, et commande le multiplexeur MUX6 pour qu'il relie la sortie du registre PXOUT1 à l'entrée de la mémoire TMB1. A l'arrivée du premier pixel C1b0 du bloc de couleur C1, la machine d'état FSMC1 est configurée pour commander le transfert de ce pixel dans le registre PXOUT1, dès sa réception par l'unité BRU :

$$C1b0 \rightarrow PXOUT1 \qquad // TMB1(1)=[C2b0..C2bp]$$

A l'arrivée du second pixel C1a0, la machine d'état FSMC1 est configurée pour commander le transfert de ce pixel dans le flux de sortie PXS :

$$C1a0 \rightarrow PXS \qquad // TMB1(1)=[C2b0..C2bp]$$

A l'arrivée du troisième pixel C1 b1, la machine d'état est configurée pour commander simultanément le transfert du pixel C2b0 de la mémoire TMB1 vers le flux de sortie PXS, le transfert du pixel C1b0 du registre PXOUT1 vers la mémoire TMB1 et le transfert du pixel reçu C1b1 dans le registre PXOUT1 :

$$C2b0 \rightarrow PXS \text{ et } C1b0 \rightarrow TMB1 \text{ et } C1b1 \rightarrow PXOUT1$$

$$// \; TMB1(1)=[C2b1..C2bp/C1b0]$$

La machine d'état FSMC1 est configurée pour répéter les opérations réalisées durant ces deux derniers cycles jusqu'à la réception du dernier pixel C1 ap du bloc de couleur C1, qui est transféré dans le flux de sortie PXS. Le contenu du registre PXOUT1, à savoir le pixel C1bp est ensuite transféré dans la mémoire TMB1, et le pixel C2bp est transféré de la mémoire TMB1 vers le flux de sortie PXS:

$$C1a1 \rightarrow PXS \qquad\qquad // \; TMB1(1)=[C2b1..C2bp/C1b0]$$

$$C2b1 \rightarrow PXS \text{ et } C1b1 \rightarrow TMB1 \text{ et } C1b2 \rightarrow PXOUT1$$

$$// \; TMB1(1)=[C2b2..C2bp/C1b0/C1b1]$$

$$\ldots$$

$$C1ap \rightarrow PXS \qquad\qquad // \; TMB1(1)=[C2bp/C1b0..C1b(p-1)]$$

$$C2bp \rightarrow PXS \text{ et } C1bp \rightarrow TMB1 \qquad // \; TMB1(1)=[C1b0..C1bp]$$

Une ligne d'image contenant des pixels de couleur C1 alternés avec des pixels de couleurs C2 est ainsi reconstituée dans le flux de sortie PXS, tandis que les pixels C1b0 à C1 bp ont été stockés dans la mémoire TMB1 à la place des pixels C2b0 à C2bp.

Par ailleurs, si le premier bloc de couleur C1 d'une image contient des pixels dupliqués deux à deux, la mémoire TMB1 ne mémorisant alors pas les pixels d'un bloc précédent de couleur C2 de la même image, la machine d'état FSMC1 peut être configurée pour mémoriser dans la mémoire TMB1 un pixel sur deux de couleur C1 sans transférer de pixels dans le flux de sortie PXS.

La figure 12 représente l'état de l'unité BRU au début de la réception d'un bloc de pixels de couleur C3 comprenant des pixels numérotés de C3b0 à C3bp appartenant à une même ligne d'une image, en alternance avec des pixels numérotés de C3a0 à C3ap appartenant à une ligne précédente de l'image. Le bloc de couleur C3 commence par le pixel C3b0. Juste avant le début de la réception du premier pixel C3b0, la mémoire TMB1 mémorise dans une première ligne des pixels de couleur C1, numérotés de C1b0 à C1 bp, et dans une seconde ligne des pixels de couleur C4, numérotés de C4b0 à C4bp :

$$TMB1(1)=[C1b0..C1bp] \text{ et } TMB1(2)=[C4b0..C4bp]$$

La machine d'état FSMC1 commande le multiplexeur MUX5 pour qu'il relie l'entrée CST à l'entrée du multiplexeur MUX4, et commande le multiplexeur MUX6 pour qu'il relie la sortie du registre PXOUT1 à l'entrée de la mémoire TMB1. A l'arrivée du premier pixel C3b0 du bloc de couleur C3, la machine d'état FSMC1 est configurée pour commander le transfert de ce pixel dans le registre PXOUT1, dès sa réception par l'unité BRU :

$$C3b0 \rightarrow PXOUT1 \qquad\qquad // \; TMB1(2)=[C4b0..C4bp]$$

A l'arrivée du second pixel C3a0, la machine d'état FSMC1 est configurée pour commander le transfert de ce pixel dans le flux de sortie PXS :

$$C3a0 \rightarrow PXS \qquad\qquad // \; TMB1(2)=[C4b0..C4bp]$$

A l'arrivée du troisième pixel C3b1, la machine d'état est configurée pour commander simultanément le transfert du pixel C4b0 de la mémoire TMB1 vers le flux de sortie PXS, le transfert du pixel C3b0 du registre PXOUT1 vers la mémoire TMB1 et le transfert du pixel reçu C3b1 dans le registre PXOUT1 :

$$C4b0 \rightarrow PXS \text{ et } C3b0 \rightarrow TMB1 \text{ et } C3b1 \rightarrow PXOUT1$$

$$// \ TMB1(2)=[C4b1..C4bp/C3b0]$$

La machine d'état FSMC1 est configurée pour répéter les opérations réalisées durant ces deux cycles jusqu'à la réception du dernier pixel C3ap du bloc de couleur C3, qui est transféré dans le flux de sortie PXS. Le pixel C4bp est ensuite transféré de la mémoire TMB1 vers le flux de sortie PXS et le contenu du registre PXOUT1, à savoir le pixel C3bp est transféré dans la mémoire TMB1 :

$$C3a1 \rightarrow PXS \qquad\qquad // \ TMB1(2)=[C4b1..C4bp/C3b0]$$

$$C4b1 \rightarrow PXS \text{ et } C3b1 \rightarrow TMB1 \text{ et } C3b2 \rightarrow PXOUT1$$

$$// \ TMB1(2)=[C4b2..C4bp/C3b0/C3b1]$$

$$\ldots$$

$$C3ap \rightarrow PXS \qquad\qquad // \ TMB1(2)=[C4bp/C3b0..C3b(p-1)]$$

$$C4bp \rightarrow PXS \text{ et } C3bp \rightarrow TMB1 \qquad // \ TMB1(2)=[C3b0..C3bp]$$

Une ligne d'image contenant des pixels de couleur C3 alternés avec des pixels de couleur C4 est ainsi reconstituée dans le flux de sortie, tandis que les pixels C3b0 à C3bp ont été stockés dans la mémoire TMB1 à la place des pixels C4b0 à C4bp.

Par ailleurs, si le premier bloc de couleur C3 d'une image contient des pixels dupliqués deux à deux, la mémoire TMB1 ne mémorisant alors pas les pixels d'un bloc précédent de couleur C4 de la même image, la machine d'état FSMC1 peut être configurée pour mémoriser dans la mémoire TMB1 un pixel sur deux de couleur C3 sans transférer de pixel dans le flux de sortie PXS.

La figure 13 représente l'état de l'unité BRU au début de la réception d'un bloc de pixels de couleur C2 comprenant des pixels numérotés de C2b0 à C2bp appartenant à une même ligne d'une image, en alternance avec des pixels numérotés de C2a0 à C2ap appartenant à une ligne précédente de l'image. Le bloc de couleur C2 commence par le pixel C2b0. Juste avant le début de la réception du premier pixel C2b0, la mémoire TMB1 mémorise dans une première ligne des pixels de couleur C1, numérotés de C1b0 à C1 bp, et dans une seconde ligne des pixels de couleur C3, numérotés de C3b0 à C3bp :

$$TMB1(1)=[C1b0..C1bp] \text{ et } TMB1(2)=[C3b0..C3bp]$$

La machine d'état FSMC1 commande le multiplexeur MUX5 pour qu'il relie l'entrée CST à l'entrée du multiplexeur MUX4, et commande le multiplexeur MUX6 pour qu'il relie l'entrée CST à l'entrée de la mémoire TMB1. A l'arrivée du premier pixel C2b0 du bloc de couleur C2, la machine d'état FSMC1 est configurée pour commander le transfert du pixel C1b0 de la mémoire TMB1 vers le flux de sortie PXS, et simultanément, le transfert du pixel C2b0 dans la mémoire TMB1 dès sa réception par l'unité BRU :

$$C1b0 \rightarrow PXS \text{ et } C2b0 \rightarrow TMB1 \qquad // \ TMB1(1)=[C1b1..C1bp/C2b0]$$

A l'arrivée du second pixel C2a0, la machine d'état FSMC1 est configurée pour commander le transfert de ce pixel dans le flux de sortie PXS, dès sa réception par l'unité BRU :

$$C2a0 \rightarrow PXS \qquad\qquad // \ TMB1(1)=[C1b0..C1bp/C2b0]$$

La machine d'état FSMC1 est configurée pour répéter les opérations réalisées durant ces deux cycles jusqu'à la réception du dernier pixel C2ap du bloc de couleur C2, qui est transféré dans le flux de sortie PXS :

C1b1→PXS et C2b1→TMB1      // TMB1(1)=[C1b2..C1bp/C2b0/C2b1]

C2a1→PXS      // TMB1(1)=[C1b2..C1bp/C2b0/C2b1]

...

C1bp→PXS et C2bp→TMB1      // TMB1(1)= [C2b0..C2bp]

C2ap→PXS      // TMB1(1)= [C2b0..C2bp]

Une ligne d'image contenant des pixels de couleur C1 alternés avec des pixels de couleur C2 est ainsi reconstituée dans le flux de sortie, tandis que les pixels C2b0 à C2bp ont été stockés dans la mémoire TMB1 à la place des pixels C1b0 à C1bp.

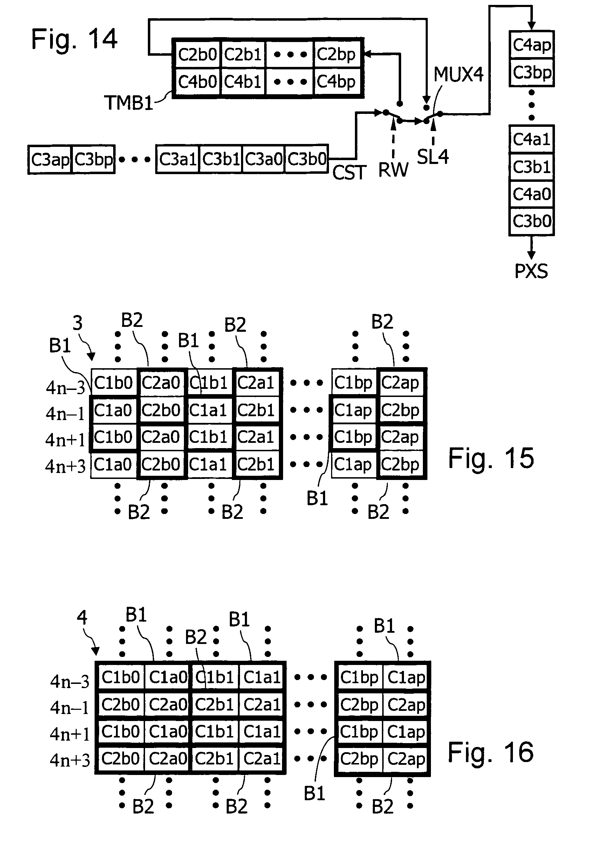

La figure 14 représente l'état de l'unité BRU au début de la réception d'un bloc de pixels de couleur C4 comprenant des pixels numérotés de C4b0 à C4bp appartenant à une même ligne d'une image, en alternance avec des pixels numérotés de C4a0 à C4ap appartenant à une ligne précédente de l'image. Le bloc de couleur C4 commence par le pixel C4b0. Juste avant le début de la réception du premier pixel C4b0, la mémoire TMB1 mémorise dans une première ligne des pixels de couleur C2, numérotés de C2b0 à C2bp, et dans une seconde ligne des pixels de couleur C3, numérotés de C3b0 à C3bp :

TMB1(1)=[C2b0..C2bp] et TMB1(2)=[C3b0..C3bp]

La machine d'état FSMC1 commande le multiplexeur MUX5 pour qu'il relie l'entrée CST à l'entrée du multiplexeur MUX4, et commande le multiplexeur MUX6 pour qu'il relie l'entrée CST à l'entrée de la mémoire TMB1. A l'arrivée du premier pixel C4b0 du bloc de couleur C4, la machine d'état FSMC1 est configurée pour commander le transfert du pixel C3b0 de la mémoire TMB1 vers le flux de sortie PXS, et simultanément, le transfert du pixel C4b0 dans la mémoire TMB1 dès sa réception par l'unité BRU :

C3b0→PXS et C4b0→TMB1      // TMB1(2)=[C3b1..C3bp/C4b0]

A l'arrivée du second pixel C4a0, la machine d'état FSMC1 est configurée pour commander le transfert de ce pixel dans le flux de sortie PXS dès sa réception par l'unité BRU :

C4a0→PXS      // TMB1(2)=[C3b0..C3bp/C4b0]

La machine d'état FSMC1 est configurée pour répéter les opérations réalisées durant ces deux cycles jusqu'à la réception du dernier pixel C4ap du bloc de couleur C4, qui est transféré dans le flux de sortie :

C3b1→PXS et C4b1→TMB1      // TMB1(2)=[C3b2..C3bp/C4b0/C4b1]

C4a1→PXS      // TMB1(2)=[C3b2..C3bp/C4b0/C4b1]

...

C3bp→PXS et C4bp→TMB1      // TMB1(2)= [C4b0..C4bp]

C4ap→PXS      // TMB1(2)= [C4b0..C4bp]

Une ligne d'image contenant des pixels de couleur C3 alternés avec des pixels de couleur C4 est ainsi reconstituée dans le flux de sortie PXS, tandis que les pixels C4b0 à C4bp ont été stockés dans la mémoire TMB1 à la place des pixels C3b0 à C3bp.

Dans les figures 11 et 12, si dans le flux d'entrée CST de l'unité BRU, le pixel C1a0 ou C3a0 arrive avant le pixel C1b0 ou C3b0, la machine d'état FSMC1 commande le multiplexeur MUX5 pour qu'il relie l'entrée CST à l'entrée du multiplexeur MUX4, et commande le multiplexeur MUX6 pour qu'il relie l'entrée CST à l'entrée de la mémoire TMB1. Dans les figures 13 et 14, si dans le flux d'entrée CST de l'unité BRU, le pixel C2a0 ou C4a0 arrive avant le pixel C2b0 ou C4b0, la machine d'état FSMC1 commande le multiplexeur MUX5 pour qu'il relie la sortie du registre PXOUT1 à l'entrée du multiplexeur MUX4, et commande le multiplexeur MUX6 pour qu'il relie l'entrée CST à l'entrée de la mémoire TMB1. Bien entendu, le multiplexeur MUX5 est inutile et peut être supprimé si l'ordre des pixels ai et bi dans le flux d'entrée CST est fixe.

La figure 15 représente une partie de l'image 3 ne comportant que les lignes de rang impair de l'image. Le traitement réalisé par l'unité CSU décrite précédemment permet de regrouper en blocs B1 de deux segments de ligne de un pixel de longueur, chaque pixel C1 bj de couleur C1 d'une ligne de rang 4n+1 de l'image 3 avec le pixel C1aj adjacent de même couleur de la ligne de rang 4n-1, et en blocs B2 chaque pixel C2aj de couleur C2 de la ligne de rang 4n+1 avec le pixel C2bj adjacent de même couleur de la ligne de rang 4n+3. La figure 16 représente une partie d'une l'image 4 résultant du traitement de séparation des plans couleurs de l'image 3. Dans cette image, les deux pixels de chaque bloc B1, B2 se trouvent rangés sur une même ligne.

L'invention peut également s'appliquer à un flux de données quelconques résultant d'une lecture ligne par ligne de données organisées suivant une configuration matricielle dans laquelle chaque donnée est liée spatialement avec des données voisines de droite, de gauche, supérieure et inférieure. Ainsi, l'invention peut s'appliquer aux pixels ou seulement à une composante de couleur primaire d'une image de type RGB dans laquelle chaque pixel comprend une composante rouge, une composante verte et une composante bleue.

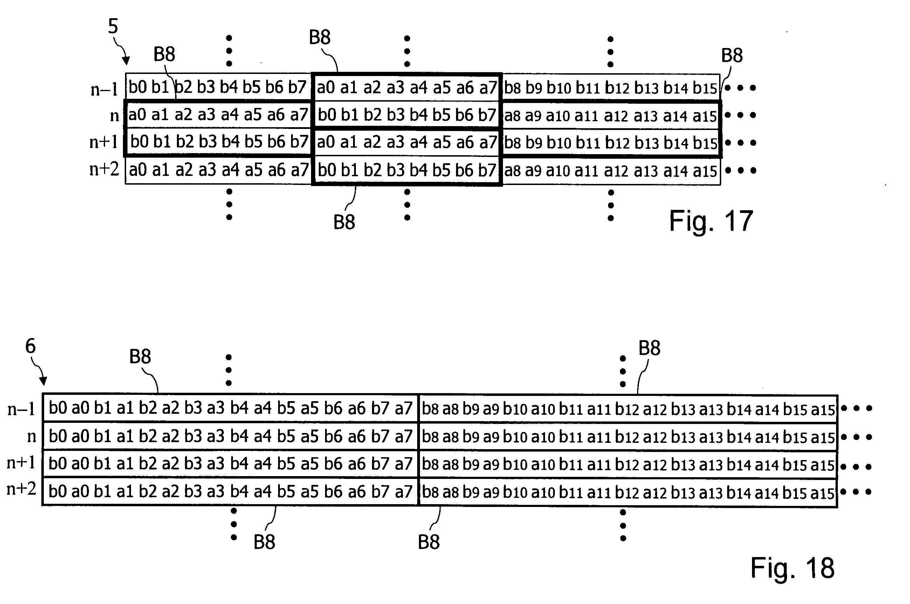

La figure 17 représente un flux de données d'entrée organisées suivant une configuration matricielle 5, l'unité CSU étant configurée pour regrouper les données du flux d'entrée en blocs B8 de deux segments de ligne adjacents par exemple de huit données b0..b7, a0..a7, le premier segment appartenant à une ligne n, et le second segment appartenant à une ligne précédente n-1 dans le flux de données.

L'unité CSU comprend une mémoire temporaire TA qui mémorise au début du traitement d'une ligne n, la moitié des données a0..ap de la ligne précédente n-1 :

$$TA=[l(n-1)a0..ap]$$

L'unité CSU comprend également une mémoire temporaire TB permettant de mémoriser un quart des pixels d'un segment à assembler. L'unité CSU est configurée pour effectuer le traitement de la ligne n de la manière suivante.

Les huit premières données a0..a7 de la ligne n reçues dans le flux d'entrée sont mémorisées dans la mémoire TA au fur et à mesure de leur réception par l'unité CSU, la mémoire TB étant vide :

$$a0 \rightarrow TA \text{ // } TA=[l(n-1)a0..ap/l(n)a0] \text{ // } TB = []$$

$$\dots$$

$$a7 \rightarrow TA \qquad \text{ // } TA=[l(n-1)a0..ap/l(n)a0..a7] \text{ // } TB = []$$

La donnée suivante b0 de la ligne n est transmise dès sa réception par l'unité CSU dans le flux de sortie CST :

$$b0 \rightarrow CST$$

Ensuite la donnée suivante b1 de la ligne n est stockée temporairement dans la mémoire TB, dès sa réception. Parallèlement, la donnée a0 de la ligne n-1 préalablement mémorisée dans la première ligne mémoire TA est transmise dans le flux de sortie :

$$b1 \rightarrow TB \text{ et } a0 \rightarrow CST \qquad \text{ // } TA=[l(n-1)a1..ap/l(n)a0..a7] \text{ // } TB=[b1]$$

La donnée suivante b2 de la ligne n est reçue par l'unité CSU et stockée temporairement, tandis que la donnée b1 est transmise dans le flux de sortie.

$$b2 \rightarrow TB \text{ et } b1 \rightarrow CST \qquad // TA=[I(n-1)a1..ap/I(n)a0..a7] // TB=[b2]$$

La donnée suivante b3 de la ligne n est ensuite reçue et stockée temporairement, tandis que la donnée stockée a1 est transmise dans le flux de sortie :

$$b3 \rightarrow TB \text{ et } a1 \rightarrow CST \qquad // TA=[I(n-1)a2..ap/I(n)a0..a7] // TB=[b2b3]$$

et ainsi de suite :

$$b4 \rightarrow TB \text{ et } b2 \rightarrow CST \qquad // TA=[I(n-1)a2..ap/I(n)a0..a7] // TB=[b3b4]$$

$$b5 \rightarrow TB \text{ et } a2 \rightarrow CST \qquad // TA=[I(n-1)a3..ap/I(n)a0..a7] // TB=[b3..b5]$$

$$b6 \rightarrow TB \text{ et } b3 \rightarrow CST \qquad // TA=[I(n-1)a3..ap/I(n)a0..a7] // TB=[b4..b6]$$

$$b7 \rightarrow TB \text{ et } a3 \rightarrow CST \qquad // TA=[I(n-1)a4..ap/I(n)a0..a7] // TB=[b4..b7]$$

Ensuite, les données suivantes a8..a15 de la ligne n sont reçues et stockées dans la seconde ligne mémoire TMB(2), tandis que les données présentes dans la première ligne mémoire TMB(1) sont transmises dans le flux de sortie :

$$a8 \rightarrow TA \text{ et } b4 \rightarrow CST \qquad // TA=[I(n-1)a4..ap/I(n)a0..a8] // TB=[b5..b7]$$

$$a9 \rightarrow TA \text{ et } a4 \rightarrow CST \qquad // TA=[I(n-1)a5..ap/I(n)a0..a9] // TB=[b5..b7]$$

$$a10 \rightarrow TA \text{ et } b5 \rightarrow CST \qquad //TA=[I(n-1)a5..ap/I(n)a0..a10] //TB=[b6b7]$$

$$a11 \rightarrow TA \text{ et } a5 \rightarrow CST \qquad //TA=[I(n-1)a6..ap/I(n)a0..a11] //TB=[b6b7]$$

$$a12 \rightarrow TA \text{ et } b6 \rightarrow CST \qquad // TA=[I(n-1)a6..ap/I(n)a0..a12] // TB=[b7]$$

$$a13 \rightarrow TA \text{ et } a6 \rightarrow CST \qquad // TA=[I(n-1)a7..ap/I(n)a0..a13] // TB=[ b7]$$

$$a14 \rightarrow TA \text{ et } b7 \rightarrow CST \qquad // TA=[I(n-1)a7..ap/I(n)a0..a14] // TB=[]$$

$$a15 \rightarrow TA \text{ et } a7 \rightarrow CST \qquad // TA=[I(n-1)a8..ap/I(n)a0..a15] // TB=[]$$

Le traitement effectué par l'unité CSU se poursuit ensuite par l'arrivée et le traitement de données b8 à b15 de la ligne n d'une manière analogue au traitement des données b0 à b7. A la fin du traitement de la ligne n, la mémoire TA mémorise toutes les données a0 à ap de la ligne n, et toutes les données b0..bp de la ligne n ont été transmises dans le flux de sortie avec les données a0..ap de la ligne n-1.

L'unité CSU nécessite ainsi une capacité de mémoire temporaire permettant de stocker moins d'une ligne du flux de données d'entrée, à savoir au maximum les données d'une demi ligne et d'un segment (données ai), et les données d'un demi segment (données bi). Ici encore, la cadence des données dans le flux de sortie CST est identique à celle des données dans le flux d'entrée.

La figure 18 représente une organisation matricielle 6 résultant du traitement réalisé par l'unité CSU. Dans cette image, les pixels de chaque bloc B8 se trouvent disposés sur une même ligne, et ordonnés de manière à provenir successivement et alternativement d'une ligne n (pixels bi) et d'une ligne précédente n-1 (pixels ai).

Comme précédemment, la présente invention concerne également un traitement inverse de celui qui vient d'être décrit, consistant à générer un flux de données dans lequel les données ai, bi dans les blocs B8 sont replacées dans l'ordre initial tel que représenté sur la figure 16. Un tel traitement inverse ne nécessite pas davantage de mémoire temporaire, comme le montre le traitement d'une ligne n décrit dans ce qui suit.

Au début de la réception de la ligne n, la mémoire TA mémorise les pixels bi de la ligne n-1 :

$$TA = [l(n-1)b0..bp]$$

Les données de la ligne n sont reçues dans l'ordre suivant :

b0a0b1a1..bpap

les données bi appartenant à la ligne n et les données ai appartenant à la ligne n-1.

Les traitements effectués sur la ligne n peuvent être les suivants :

**15**

| | |
|---|---|
| b0→TA | // TA=[I(n-1)b0..bp/I(n)b0] // TB=[] |
| a0→TB | // TA=[I(n-1)b0..bp/I(n)b0] // TB=[a0] |
| b1→TA | // TA=[I(n-1)b0..bp/I(n)b0] // TB=[a0] |
| a1→TB | // TA=[I(n-1)b0..bp/I(n)b0] // TB=[a0a1] |
| b2→TA | // TA=[I(n-1)b0..bp/I(n)b0] // TB=[a0a1] |
| a2→TB | // TA=[I(n-1)b0..bp/I(n)b0] // TB=[a0a1a2] |
| b3→TA | // TA=[I(n-1)b0..bp/I(n)b0] // TB=[a0a1a2] |
| a3→TB | // TA=[I(n-1)b0..bp/I(n)b0] // TB=[a0a1a2a3] |
| b4→TA et a0→PXS | // TA=[I(n-1)b0..bp/I(n)b0] // TB=[a1a2a3] |
| a4→TB et a1→PXS | // TA=[I(n-1)b0..bp/I(n)b0] // TB=[a2a3a4] |
| b5→TA et a2→PXS | // TA=[I(n-1)b0..bp/I(n)b0] // TB=[a3a4] |
| a5→TB et a3→PXS | // TA=[I(n-1)b0..bp/I(n)b0] // TB=[a4a5] |
| b6→TA et a4→PXS | // TA=[I(n-1)b0..bp/I(n)b0] // TB=[a5] |
| a6→TB et a5→PXS | // TA=[I(n-1)b0..bp/I(n)b0] // TB=[a6] |
| b7→TA et a6→PXS | // TA=[I(n-1)b0..bp/I(n)b0..b7] // TB=[] |
| a7→PXS | // TA=[I(n-1)b0..bp/I(n)b0..b7] // TB=[] |
| b8→TA et b0→PXS | // TA=[I(n-1)b1..bp/I(n)b0..b8] // TB=[] |
| a8→TB et b1→PXS | // TA=[I(n-1)b2..bp/I(n)b0..b8] // TB=[a8] |
| … | |
| b15→TA et b7→PXS | // TA=[I(n-1)b8..bp/I(n)b0..b15] // TB=[a8..a14] |
| a15→TB et a8→PXS | // TA=[I(n-1)b8..bp/I(n)b0..b15] // TB=[a9..a15] |
| … | |
| bp→TA et a(p-1)→PXS | // TA=[I(n-1)b(p-7)..bp/I(n)b0..bp] // TB=[] |
| ap→PXS | // TA=[I(n-1)b(p-7)..bp/I(n)b0..bp] // TB=[] |
| b(p-7)→PXS | // TA=[I(n-1)b(p-6)..bp/I(n)b0..bp] // TB=[] |
| … | |
| bp→PXS | // TA=[I(n)b0..bp] // TB=[] |

Il apparaîtra clairement à l'homme de l'art que la présente invention est susceptible de diverses variantes de réalisation et diverses applications. En particulier, l'invention peut être prévue pour constituer des blocs regroupant des données réparties sur plus de deux lignes de la configuration matricielle des données, par exemple sur trois ou quatre lignes.

Dans l'exemple des figures 17 et 18, il peut également être prévu d'autres répartitions des données dans le flux de sortie de l'unité CSU qu'une répartition du type b0a0b1a1... comprenant successivement et alternativement une donnée bi provenant d'une ligne et une donnée ai provenant d'une ligne précédente (préalablement mémorisée). Ainsi, il peut être prévu une répartition telle que b0..bk/a0..ak/b(k+1)...

Il peut être également prévu de ne traiter qu'une partie des données. Ainsi, dans l'exemple d'une image ayant une configuration de type Bayer, il peut être prévu de n'extraire qu'une partie des quatre plans couleurs, et donc seulement les pixels appartenant aux plans couleurs à extraire.

Par ailleurs, l'invention peut s'appliquer à d'autres répartitions de données dans une configuration matricielle qu'une répartition du type Bayer. Chaque ligne de la configuration matricielle peut ainsi regrouper des données appartenant à plus de deux plans couleurs, ou plus généralement, plus de deux catégories. Les lignes peuvent également non pas regrouper des données de catégories différentes comme dans la répartition du type Bayer, mais des données de mêmes catégories. Les différentes catégories de données peuvent également être réparties sur plus de deux lignes consécutives à la différence de la répartition du type Bayer.

## Revendications

1. Procédé pour réordonner des données organisées suivant une configuration matricielle, comprenant une étape de lecture ligne par ligne de données d'entrée (Ciai, Cibi, ai, bi) ayant une configuration matricielle (3, 4, 5, 6) pour obtenir un flux de données d'entrée (PXS, CST),
   **caractérisé en ce qu'**il comprend des étapes de traitement d'une ligne (4n+1, n) des données d'entrée (Ciai, Cibi, ai, bi) consistant à :

   (i) transférer dans un flux de sortie (CST, PXS) une donnée du flux d'entrée, appartenant à la ligne traitée, et transférer dans le flux de sortie au moins une donnée du flux d'entrée préalablement mémorisée, appartenant à une ligne précédente et ayant un même rang dans la configuration matricielle que la donnée transférée de la ligne traitée, et
   (ii) mémoriser une donnée du flux d'entrée appartenant à la ligne traitée et non transférée dans le flux de sortie, en remplacement de la donnée transférée, appartenant à une ligne précédente.

2. Procédé selon la revendication 1, comprenant des étapes de répétition des étapes (i) et (ii) avec une donnée non déjà transférée ou mémorisée de la ligne traitée, jusqu'à ce que toutes les données de la ligne traitée soient transférées ou mémorisées.

3. Procédé selon la revendication 1 ou 2, dans lequel les données transférées dans le flux de sortie appartiennent successivement et alternativement à une même ligne et à une même ligne précédente de l'image.

4. Procédé selon l'une des revendications 1 à 3, dans lequel une donnée sur deux du flux d'entrée est transférée dans le flux de sortie et les données du flux d'entrée non transférées dans le flux de sortie sont mémorisées.

5. Procédé selon l'une des revendications 1 à 4, dans lequel les données du flux d'entrée transférées dans le flux de sortie sont transférées dans le flux de sortie par groupes d'au moins une donnée en alternance avec des groupes d'au moins une donnée préalablement mémorisée.

6. Procédé selon l'une des revendications 1 à 5, dans lequel les données d'entrée sont des pixels d'une image dans laquelle chaque ligne comprend des pixels appartenant à plusieurs plans couleurs, les pixels étant transférés dans le flux de sortie par blocs dont tous les pixels appartiennent à un même plan couleur, et les pixels mémorisés durant le transfert d'un bloc dans le flux de sortie appartiennent à un plan couleur différent de celui des pixels du bloc transféré dans le flux de sortie.

7. Procédé selon la revendication 6, dans lequel l'image transmise dans le flux d'entrée présente une répartition de pixels du type Bayer, le procédé comprenant des étapes de transfert dans le flux de sortie des pixels d'une ligne appartenant à un même plan couleur en alternance avec des pixels du même plan couleur d'une ligne précédente préalablement mémorisée de l'image, et de mémorisation des pixels de la ligne, appartenant à un autre plan couleur.

8. Procédé selon la revendication 7, dans lequel les pixels du flux de sortie présentent une configuration matricielle dans laquelle tous les pixels de chaque ligne de la configuration matricielle appartiennent à un même plan couleur.

9. Procédé selon l'une des revendications 1 à 5, dans lequel les données d'entrée sont des pixels d'une image dans laquelle tous les pixels de chaque ligne appartiennent à un seul et même plan couleur, et les pixels du flux de sortie présentent une répartition du type Bayer, le procédé comprenant des étapes de transfert dans le flux de sortie d'un pixel sur deux d'une ligne appartenant à un même plan couleur, en alternance avec des pixels préalablement mémorisés appartenant à un autre et même plan couleur, et de mémorisation des pixels de la ligne en cours de traitement qui ne sont pas transférés dans le flux de sortie.

10. Dispositif pour réordonner des données organisées suivant une configuration matricielle,
**caractérisé en ce qu'**il est configuré pour mettre en oeuvre le procédé selon l'un des revendications 1 à 9.

11. Dispositif selon la revendication 10, comprenant une capacité de mémoire temporaire limitée à une ligne de données de la configuration matricielle des données d'entrée.

12. Flux de données, **caractérisé en ce qu'**il comprend une ligne comportant des groupes d'au moins une donnée extraite d'une même ligne d'une configuration matricielle d'origine alternant avec des groupes d'au moins une donnée extraite d'une même ligne précédente de la configuration matricielle d'origine et ayant un même rang dans la configuration matricielle que la donnée d'un groupe précédent dans la ligne de la configuration matricielle du flux de données.

13. Flux de données selon la revendication 12, dans lequel chaque groupe de données comprend une seule donnée.

14. Flux de données selon la revendication 12 ou 13, dans lequel la configuration matricielle d'origine est celle d'une image ayant une répartition du type Bayer, la ligne et la ligne précédente de la configuration d'origine étant espacées d'une ligne de la configuration d'origine.

Fig. 1

Fig. 2

Fig. 3

Fig. 4A — PCK

Fig. 4B — PXS: C1b0 X C2a0 X C1b1 X C2a1 X C1b2 X C2a2 X C1b3 X C2a3 X C1b4 X C2a4

Fig. 4C — PXS: C3b0 X C4a0 X C3b1 X C4a1 X C3b2 X C4a2 X C3b3 X C4a3 X C3b4 X C4a4

Fig. 4D — PXS: C1a0 X C2b0 X C1a1 X C2b1 X C1a2 X C2b2 X C1a3 X C2b3 X C1a4 X C2b4

Fig. 4E — PXS: C3a0 X C4b0 X C3a1 X C4b1 X C3a2 X C4b2 X C3a3 X C4b3 X C3a4 X C4b4

Fig. 4F — RW

Fig. 4G — SL1

Fig. 4H — CST: Cib0 X Cia0 X Cib1 X Cia1 X Cib2 X Cia2 X Cib3 X Cia3 X Cib4 X Cia4

## Fig. 5

| C1a0 | C1a1 | • • • | C1ap |
|------|------|-------|------|
| C3a0 | C3a1 | • • • | C3ap |

TMB

3

MUX1

RW   SL1

|        |      |      |      |      |        |      |
|--------|------|------|------|------|--------|------|
| 4n-1   | C1   | C2   | C1   | C2   | • • • C1 | C2 |
| 4n     | C3   | C4   | C3   | C4   | • • • C3 | C4 |
| 4n+1   | C1b0 | C2a0 | C1b1 | C2a1 | • • • C1bp | C2ap |
| 4n+2   | C3   | C4   | C3   | C4   | • • • C3 | C4 |
| 4n+3   | C1   | C2   | C1   | C2   | • • • C1 | C2 |
| 4n+4   | C3   | C4   | C3   | C4   | • • • C3 | C4 |

PXS

C1ap
C1bp
C1a1
C1b1
C1a0
C1b0

CST

## Fig. 6

| C2a0 | C2a1 | • • • | C2ap |
|------|------|-------|------|
| C3a0 | C3a1 | • • • | C3ap |

TMB

3

MUX1

RW   SL1

|        |      |      |      |      |        |      |
|--------|------|------|------|------|--------|------|
| 4n-1   | C1   | C2   | C1   | C2   | • • • C1 | C2 |
| 4n     | C3   | C4   | C3   | C4   | • • • C3 | C4 |
| 4n+1   | C1   | C2   | C1   | C2   | • • • C1 | C2 |
| 4n+2   | C3b0 | C4a0 | C3b1 | C4a1 | • • • C3bp | C4ap |
| 4n+3   | C1   | C2   | C1   | C2   | • • • C1 | C2 |
| 4n+4   | C3   | C4   | C3   | C4   | • • • C3 | C4 |

PXS

C3ap
C3bp
C3a1
C3b1
C3a0
C3b0

CST

## Fig. 7

| C2a0 | C2a1 | • • • | C2ap |
|------|------|-------|------|
| C4a0 | C4a1 | • • • | C4ap |

TMB

3

> PXOUT

MUX1

| | | | | | | | | |
|---|---|---|---|---|---|---|---|---|
| 4n-1 | C1 | C2 | C1 | C2 | • • • | C1 | C2 |
| 4n | C3 | C4 | C3 | C4 | • • • | C3 | C4 |
| 4n+1 | C1 | C2 | C1 | C2 | • • • | C1 | C2 |
| 4n+2 | C3 | C4 | C3 | C4 | • • • | C3 | C4 |
| 4n+3 | C1a0 | C2b0 | C1a1 | C2b1 | • • • | C1ap | C2bp |
| 4n+4 | C3 | C4 | C3 | C4 | • • • | C3 | C4 |

RW

SL1

PXS

C2ap
C2bp

C2a1
C2b1
C2a0
C2b0

CST

## Fig. 8

| C1a0 | C1a1 | • • • | C1ap |
|------|------|-------|------|
| C4a0 | C4a1 | • • • | C4ap |

TMB

3

> PXOUT

MUX1

| | | | | | | | | |
|---|---|---|---|---|---|---|---|---|
| 4n-1 | C1 | C2 | C1 | C2 | • • • | C1 | C2 |
| 4n | C3 | C4 | C3 | C4 | • • • | C3 | C4 |
| 4n+1 | C1 | C2 | C1 | C2 | • • • | C1b | C2 |
| 4n+2 | C3 | C4 | C3 | C4 | • • • | C3 | C4 |
| 4n+3 | C1 | C2 | C1 | C2 | • • • | C1 | C2 |
| 4n+4 | C3a0 | C4b0 | C3a1 | C4b1 | • • • | C3ap | C4bp |

RW

SL1

PXS

C4ap
C4bp

C4a1
C4b1
C4a0
C4b0

CST

Fig. 9

Fig. 10A

Fig. 10B

Fig. 10C

Fig. 10D

Fig. 10E

Fig. 10F

Fig. 10G

EP 2 230 854 A1

Fig. 11

Fig. 12

Fig. 13

24

Fig. 14

| C2b0 | C2b1 | • • • | C2bp |
|------|------|-------|------|
| C4b0 | C4b1 | • • • | C4bp |

TMB1

| C4ap |
|------|
| C3bp |

| C3ap | C3bp | • • • | C3a1 | C3b1 | C3a0 | C3b0 |
|------|------|-------|------|------|------|------|

CST   RW   SL4   MUX4

| C4a1 |
|------|
| C3b1 |
| C4a0 |
| C3b0 |

PXS

Fig. 15

|       | B1   | B2   | B1   | B2   |       | B1   | B2   |
|-------|------|------|------|------|-------|------|------|
| 4n−3  | C1b0 | C2a0 | C1b1 | C2a1 | • • • | C1bp | C2ap |
| 4n−1  | C1a0 | C2b0 | C1a1 | C2b1 | • • • | C1ap | C2bp |
| 4n+1  | C1b0 | C2a0 | C1b1 | C2a1 | • • • | C1bp | C2ap |
| 4n+3  | C1a0 | C2b0 | C1a1 | C2b1 | • • • | C1ap | C2bp |

Fig. 16

|       | B1   | B2   | B1   |      |       | B1   |      |
|-------|------|------|------|------|-------|------|------|
| 4n−3  | C1b0 | C1a0 | C1b1 | C1a1 | • • • | C1bp | C1ap |
| 4n−1  | C2b0 | C2a0 | C2b1 | C2a1 | • • • | C2bp | C2ap |
| 4n+1  | C1b0 | C1a0 | C1b1 | C1a1 | • • • | C1bp | C1ap |
| 4n+3  | C2b0 | C2a0 | C2b1 | C2a1 | • • • | C2bp | C2ap |

5

| | | |
|---|---|---|
| n-1 | b0 b1 b2 b3 b4 b5 b6 b7 ... a0 a1 a2 a3 a4 a5 a6 a7 ... b8 b9 b10 b11 b12 b13 b14 b15 ... |
| n | a0 a1 a2 a3 a4 a5 a6 a7 ... b0 b1 b2 b3 b4 b5 b6 b7 ... a8 a9 a10 a11 a12 a13 a14 a15 ... |
| n+1 | b0 b1 b2 b3 b4 b5 b6 b7 ... a0 a1 a2 a3 a4 a5 a6 a7 ... b8 b9 b10 b11 b12 b13 b14 b15 ... |
| n+2 | a0 a1 a2 a3 a4 a5 a6 a7 ... b0 b1 b2 b3 b4 b5 b6 b7 ... a8 a9 a10 a11 a12 a13 a14 a15 ... |

B8   B8   B8   B8

Fig. 17

6

| | |
|---|---|
| n-1 | b0 a0 b1 a1 b2 a2 b3 a3 b4 a4 b5 a5 b6 a6 b7 a7 ... b8 a8 b9 a9 b10 a10 b11 a11 b12 a12 b13 a13 b14 a14 b15 a15 ... |
| n | b0 a0 b1 a1 b2 a2 b3 a3 b4 a4 b5 a5 b6 a6 b7 a7 ... b8 a8 b9 a9 b10 a10 b11 a11 b12 a12 b13 a13 b14 a14 b15 a15 ... |
| n+1 | b0 a0 b1 a1 b2 a2 b3 a3 b4 a4 b5 a5 b6 a6 b7 a7 ... b8 a8 b9 a9 b10 a10 b11 a11 b12 a12 b13 a13 b14 a14 b15 a15 ... |
| n+2 | b0 a0 b1 a1 b2 a2 b3 a3 b4 a4 b5 a5 b6 a6 b7 a7 ... b8 a8 b9 a9 b10 a10 b11 a11 b12 a12 b13 a13 b14 a14 b15 a15 ... |

B8   B8   B8   B8

Fig. 18

**Europäisches Patentamt**
**European Patent Office**
**Office européen des brevets**

## RAPPORT DE RECHERCHE EUROPEENNE

Numéro de la demande

EP 10 00 1190

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2005/104982 A1 (SHIMAZU YOSHIHISA [JP] ET AL) 19 mai 2005 (2005-05-19) * abrégé; figures 1,2,4,11,19,20,43 * ----- | 1-14 | INV. H04N9/04 H04N9/64 |
| A | US 2007/146511 A1 (KINOSHITA MASAYA [JP] ET AL) 28 juin 2007 (2007-06-28) * figures 27-30 * ----- | 1-14 | |
| A | EP 1 349 399 A (MATSUSHITA ELECTRIC IND CO LTD [JP]) 1 octobre 2003 (2003-10-01) * figures 1,5,7,9 * ----- | 1-14 | |
| A | WO 00/57634 A (BIOMORPHIC VLSI INC [US]) 28 septembre 2000 (2000-09-28) * figures 1,6 * ----- | 1-14 | |

DOMAINES TECHNIQUES RECHERCHES (IPC)

H04N

Le présent rapport a été établi pour toutes les revendications

| Lieu de la recherche | Date d'achèvement de la recherche | Examinateur |
|---|---|---|
| La Haye | 24 février 2010 | Mao, Pauline |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 00 1190

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-02-2010

| Document brevet cité au rapport de recherche | | Date de publication | Membre(s) de la famille de brevet(s) | | Date de publication |
|---|---|---|---|---|---|
| US 2005104982 | A1 | 19-05-2005 | CN<br>KR | 1645908 A<br>20050039626 A | 27-07-2005<br>29-04-2005 |
| US 2007146511 | A1 | 28-06-2007 | CN<br>JP<br>JP | 1968423 A<br>4389865 B2<br>2007142697 A | 23-05-2007<br>24-12-2009<br>07-06-2007 |
| EP 1349399 | A | 01-10-2003 | CN<br>US | 1447591 A<br>2003183829 A1 | 08-10-2003<br>02-10-2003 |
| WO 0057634 | A | 28-09-2000 | AU<br>TW<br>US | 6407100 A<br>462186 B<br>6661457 B1 | 09-10-2000<br>01-11-2001<br>09-12-2003 |

EPO FORM P0460

Pour tout renseignement concernant cette annexe : voir Journal Officiel de l'Office européen des brevets, No.12/82